(19) Europäisches Patentamt

European Patent Office

Office européen des brevets

(11) **EP 0 490 934 B1**

(12) **EUROPEAN PATENT SPECIFICATION**

(45) Date of publication and mention
of the grant of the patent:
**12.08.1998 Bulletin 1998/33**

(21) Application number: **90913131.0**

(22) Date of filing: **05.09.1990**

(51) Int. Cl.$^6$: **A62D 3/00**, B09B 3/00,
F24C 7/02, H05B 6/80

(86) International application number:
**PCT/CA90/00283**

(87) International publication number:
**WO 91/03281 (21.03.1991 Gazette 1991/07)**

(54) **METHOD AND APPARATUS FOR THE CONTROLLED REDUCTION OF ORGANIC MATERIAL**

VERFAHREN UND VORRICHTUNG ZUR KONTROLLIERTEN REDUKTION ORGANISCHEN STOFFS

PROCEDE ET APPAREIL PERMETTANT UNE REDUCTION REGULEE DE MATIERES ORGANIQUES

(84) Designated Contracting States:
**DE FR GB IT NL SE**

(30) Priority: **07.09.1989 CA 610657**

(43) Date of publication of application:
**24.06.1992 Bulletin 1992/26**

(73) Proprietor:
**EMERY MICROWAVE MANAGEMENT INC.
Ajax, Ontario, Canada, L1S 1S3 (CA)**

(72) Inventor:
**EMERY MICROWAVE MANAGEMENT INC.
Ajax, Ontario, Canada, L1S 1S3 (CA)**

(74) Representative:
**Dixon, Donald Cossar et al
Gee & Co.
Chancery House
Chancery Lane
London WC2A 1QU (GB)**

(56) References cited:
**EP-A- 0 318 598          CA-A- 1 221 743
GB-A- 1 092 861          GB-A- 2 018 813
US-A- 3 449 213          US-A- 3 777 095**

• **Patent Abstracts of Japan, Vol 7, No 185, C181, abstract of JP 58- 88084, publ 1983-05-26**
• **Patent Abstracts of Japan, Vol 7, No 185, C181, abstract of JP 58- 88085, publ 1983-05-26**
• **WO 89/04355**

## Description

### TECHNICAL FIELD

This application relates to a method and apparatus for the reduction of organic polymeric materials using microwave radiation.

### BACKGROUND OF THE INVENTION

There are numerous instances in diverse areas where it is desirable that organic polymeric materials be reduced. Such a requirement may arise in the processing of raw materials, as, for example, in the extraction of oil from oil shales, or in the treatment of waste materials.

The waste treatment category will arise in an endless number of situations. This may be due to the useful life of the product having been completed. For example, huge quantities of worn cut tires are in existence. The waste may also arise from normal industrial processes. Refinery sludge and pulp mill effluents are examples. Municipal sewage and garbage are other sources of large quantities of organic waste.

Various considerations dependent on the particular waste type mandate that the waste be treated. In the case of municipal sewage, for example, the waste is a health and environmental hazard and its toxicity must be neutralized. In the case of tires the emphasis is on recycling of the very substantial amounts particularly of oil and carbon black which are the major components of tires.

The treatment of various of these waste types as, for example, by burning, may itself lead to environmental pollution problems.

There is therefore an ongoing need for more efficient treatment and recycling methods for organic materials.

Against this background the present invention is directed toward the use of microwave energy in a method and apparatus which is applicable in a very general sense to a very wide range of organic polymeric materials.

US-A-3 449 213 discloses a pyrolytic process for obtaining chemicals from coal by heating the coal utilizing microwave energy to high temperatures of about 427°C. The extraction is by heat and intended to be for the extraction of volatile materials which are for the most part already present in the coal. It is not primarily a process for breaking down the original constituents into a desired range of product constituents. Furthermore, the process is carried out in a vacuum.

GB-A-1 092 861 discloses a process for the heat treatment of coal and, as with the above reference, utilizes microwaves in that process purely for heating. The concern is to use the microwaves to heat rapidly and uniformly, as evidenced by the great concern with particle sizes, and as discussed on page 2, column 1, line 8 et seq.

WO 89/04355 discloses a process for the destructive distillation or organic materials by microwave pyrolysis in a reducing atmosphere to cause substantial fission of carbon-carbon and chemical bonds in the organic material. Such a process involves the use of microwave energy without control of the temperature of the organic material and results in very high temperatures in the organic material that can be detrimental to the quality of the recovered product. This process also involves inefficient use of energy.

It is accordingly an object of the invention to provide an improved process and apparatus for the controlled reduction of organic polymeric material and in particular a process that is more energy efficient.

According to the present invention there is provided a process for the controlled reduction of organic polymeric material consisting of subjecting said material in a reducing atmosphere to levels of microwave radiation sufficient to cause depolymerisation of said material, characterised in that said process includes the steps of determining in accordance with the nature of the material an optimum value of surface temperature for microwave absorption by the material, monitoring the surface temperature of the material, controlling the power of applied microwaves to obtain said optimum value and subsequently controlling the power of applied microwaves in order to maintain said surface temperature at said optimum value during depolymerisation of said material.

According to a further aspect of the invention there is provided an apparatus for carrying out the process of the invention comprising an airtight chamber; means for feeding said material along a path through said chamber; a plurality of microwave generators for irradiating said material in said chamber each provided with a parabolic wave guide for focusing the microwave output of the generator, said generators being arranged in a plurality of rows each containing a plurality of said generators, said rows extending tranversely to said path in upstream and downstream relationship thereto; means for measuring surface temperature of said material; means for controlling the power of microwaves applied by said generators, in response to said measuring means; means for removing gaseous products from said chamber; and means for removing solid residue from said chamber.

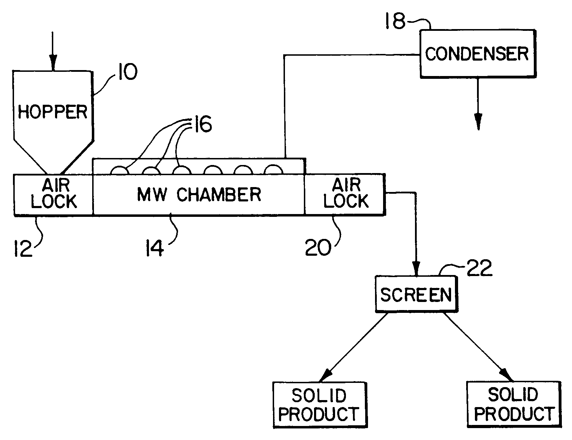

### BRIEF DESCRIPTION OF THE DRAWING

The drawing illustrates schematically the method according to the invention.

### BEST MODE FOR CARRYING OUT THE INVENTION

In the following description, similar features in the drawings have been given similar reference numerals.

The method and apparatus of the invention can be applied to an almost limitless variety of organic materials. It is believed that the microwave energy results in the severing of weaker molecular bonds in longer chain molecules to reduce those molecules to simpler forms. This is in effect a de-polymerization process.

A general schematic of the invention is illustrated in the drawing. Materials are fed into a hopper 10 or into a similar means suitable to the particular feed material.

The material is then fed via an air lock 12 into a microwave chamber 14. The material is irradiated by microwave energy from magnetrons 16.

Gaseous products are taken off to a condenser 18 and condensed to liquid products, generally oils and sulfur. These gaseous products are removed sequentially from more volatile/lighter to less volatile/heavier gases. The temperature in the chamber may be controlled to control this sequential production of gases.

Solid residues exit the chamber 14 through a second air lock 20. These products are than separated, as by screen 22, into various groups. Carbon black will normally comprise a substantial part of these products. Others would include, for example, steel in the case of tire reduction.

Optimum process conditions and apparatus configuration will be selected for a given material after an initial analysis of that material. Several types of analyses are preferably carried out with differing objectives.

Thus, an initial analysis of shape and structure may be made with a view to adapting the microwave chamber and the feeder means to that material. For example, the toroidal shape of tires suggests a different feeder and chamber design than, say, a cube of compressed plastic scrap.

A further analysis is then preferably performed on the material to determine its composition. For example, in treating material which might be categorized essentially as PVC, one would also like to know the quantities of extenders and other such components which might be present.

The results of this analysis will provide information as to the products which are likely to be obtained from the breakdown of the material, the quantities of each such product that might be expected and the order in which the products are likely to be obtained.

A further analysis is then carried out, generally by lab testing, to determine the energy requirement for the process. Having determined that requirement per unit of throughput material, and knowing the volume of material required to be processed, the total energy requirement can be calculated.

The result of these analyses can then be used to optimize apparatus design and process conditions for the various stages in the process.

In the flow of material through the process the first area of concern is in the feeding arrangement.

While the process can be carried out on a batch basis, it is much preferred that it be continuous. Accordingly, since the microwave chamber must be sealed, the feeding apparatus must meet this requirement. One such feeding apparatus design which is useful with a variety of feed material is a piston and cylinder arrangement. For solid feeds a feed hopper can be located above and toward one end of a cylindrical feed conduit to deliver feed material to the conduit. A piston may then be utilized to move the material along the conduit toward the microwave chamber. The continuous plug formed in the feed conduit by the feed material will serve to seal the inlet to the microwave chamber.

A second preferred apparatus for bulk materials and relatively low temperature operations is in the form of an endless belt conveyor. The belt material must be permeable to microwaves and must not itself break down under conditions of use.

For higher temperature operations another preferred feed apparatus comprises one or more stainless steel screw conveyors.

For certain material configurations an airlock may be introduced at the entry to the microwave chamber.

Similarly, in some cases an airlock will be necessary at the solids outlet from the microwave chamber.

The next consideration in the flow of material through the process is the shape of the microwave chamber itself.

Several factors will influence the physical characteristics of the microwave chamber into which the feed material is introduced.

The overall shape of the chamber will generally be chosen based on the physical characteristics of the feed material and the type of feed apparatus utilized. For example, where the piston and cylinder feed arrangement is utilized, a cylindrical chamber may be chosen. Where an endless belt conveyor is utilized, a chamber of rectangular cross-section will generally be preferred.

The overall shape is also influenced by the desire to obtain maximum microwave penetration into the material being processed; that is, the amount of microwave radiation to which the material is subjected may be controlled in part by proper selection of the shape of the chamber.

Having chosen an optimum overall shape for the chamber, additional factors may be considered to add to the efficiency of the operation. Thus, a resonant cavity may be chosen such that reflected microwaves will be reinforcing. For example, a typical installation of rectangular cross section might be 2 microwaves deep and 6 microwaves wide.

Having determined total power requirements and a basic cross section for the chamber, other factors come into play for purposes of optimization.

A number of variables in the process and apparatus can be predetermined for a given application or controlled in the course of carrying out the method. For a given application the objective is to obtain the most efficient operation in terms of energy applied per unit mass of material processed, always subject to various process constraints to be discussed.

The manner of applying the total energy requirement in a given case is generally established by a balancing of factors. In order to supply sufficient energy to initiate the reaction in a reasonable time and then to obtain the desired products from the material in the desired sequence, one must appropriately control applied energy. Thus, the basic microwave generation may be obtained from multiple small wave generators rather than from a single magnetron. The output from the wave generators may be continuous, pulsed or otherwise varied. The strength of the microwaves generated can be varied by varying the power input to the generators.

A typical chamber of rectangular cross section might include 4 transverse rows of 3 microwave generators each.

In addition to the arrangement and power of the wave generators, the energy applied per unit mass of treated material will be affected by the time of exposure of the material to the microwave; that is, the dwell time of the material. The energy factors must at this point again be taken in context with chamber geometry. Thus, dwell time may be directly affected by the rate of feed of the material being processed, but, as well, the length of the chamber may be varied and the mass under bombardment may be varied by varying the capacity of the microwave chamber.

Furthermore, the focus of the microwaves contributes markedly to efficiency, and parabolic wave guides have been developed to provide a point focus for the waves from a given generator. A series of wave guides may be used with a series of wave generators to provide an overlapping series of microwave curtains to allow very good control of the amount of energy applied to the material.

The surface temperature of the material strongly affects microwave absorption by the material, so that in accordance with the invention the surface temperature is monitored and the power input to the microwave generators is adjusted as required to obtain optimum surface temperature. Thus, as the reactions proceed as the material moves through the microwave chamber, less energy input may be required to maintain optimum surface temperature, so that downstream microwave generators may be operated at lower power input.

It is also useful to monitor the internal temperature of the material in the microwave chamber as a means of predicting what products are likely to be coming off the material at any time. The microwave chamber is preferably kept at slightly above atmospheric pressure. The pressure facilitates removal of gaseous products. The preferred pressure range is 0.018 to 0.037 mmHg ($\frac{1}{4}$ to $\frac{1}{2}$" $H_2O$).

It has been found that the process works better in a more dense atmosphere. Accordingly, after the process is started up and run to the point where the first of the material fed into the chamber has been substantially broken down, the process is found to proceed more efficiently. In that regard the process must be carried out in a reducing atmosphere, and the concentration of reducing gases is increased as the material is broken down. It is theorized that the presence of additional reducing gases may tend to aid in further breakdown of the material, particularly at its surface.

It may be preferable in some instances to utilize a two part chamber to isolate the wave generators from the reducing atmosphere. A horizontal microwave permeable gas impermeable barrier would be one solution, with the top and bottom parts of the chamber both being resonant.

It may be necessary to add a reducing gas with the feed material. The purpose of the reducing gas is to damp out any oxidation which might otherwise occur with possible catastrophic results. An inert gas such as nitrogen might also be used, but any compatible reducing gas will do. It should be noted that it is not generally necessary that a reducing gas be added, but that the possibility exists in certain instances.

It has been found that some catalysts enhance the efficiency of the process. Thus, the addition of carbon black to the input material in the case of tires results in the oils coming off the material more quickly and at lower temperatures.

A further external factor will frequently be present which will be of primary concern in terms of the balancing of the internal factors. The physical space available in a plant to accommodate apparatus according to the invention is often limited, so all of the controllable factors must be balanced in the face of that restriction. The importance of this space consideration is highlighted by the fact that some installations may have a substantial overall length. For example, lengths in the order of 10m. will not be unusual.

In that regard a preferred approach is to utilize a series of modules connected end to end. This has several advantages. Among these is the ability to remove and replace a single module to carry out repairs, thereby avoiding downtime. A further advantage is in ease of manufacture and handling of smaller modules. A preferred module is about 1.2m. in length.

Power availability is a further external variable which may be beyond the control of a user, usually because of the particular location of the plant.

The products of the process are obtained in the form of gaseous and solid material. The gaseous materials are recovered utilizing one or more aspirators on the microwave chamber. The solid products are in the form of residues conveyed through a microwave chamber outlet.

The gaseous products are condensed to provide various hydrocarbon liquids. In that regard it may be necessary to provide heat to the exhaust system to prevent premature condensation.

The solid products comprise carbon black in micron size and various inorganic materials which may have been present in the feed. For example, in addition to the various oils and carbon black obtained from tires, the residues will include steel, silica and the like components.

For example, a typical PVC lab sample yielded 125 g. solid residue from 160 g. of the original PVC. The residue was almost entirely carbon black containing in total less than 3.159 ppm of the following elements and compounds: As; Ba; B; Cd; Cr; Pb; Se; U; $NO_2 + NO_3$; $NO_2$; Ag; Hg; CN(F); F.

As a further example, typical tires will yield per tonne of tires, 476.9 to 635.9 litres (3 to 4 barrels) of oil, 260 to 320 Kg. of carbon black, 40 to 45 Kg. of steel and 30 to 36 Kg. of fibre.

## Claims

1. A process for the controlled reduction of organic polymeric material consisting of subjecting said material in a reducing atmosphere to levels of microwave radiation sufficient to cause depolymerisation of said material, characterised in that said process includes the steps of determining in accordance with the nature of the material an optimum value of surface temperature for microwave absorption by the material, continuously monitoring the surface temperature of the material, controlling the power of applied microwaves to obtain said optimum value and subsequently controlling the power of applied microwaves in order to maintain said surface temperature at said optimum value during depolymerisation of said material.

2. A process as claimed in Claim 1, further comprising continuously feeding a stream of said material through an airtight microwave chamber (14) and continuously withdrawing gaseous and solid products from said chamber (14).

3. A process as claimed in Claim 2, wherein said process further comprises feeding said material into said chamber (14) through a cylinder and propelled by a piston; feeding said material into said chamber (14) on an endless belt conveyor; or feeding said material into said chamber (14) by means of a screw conveyor.

4. A process as claimed in Claim 2 or 3, comprising the further step of controlling the degree of exposure of said stream to microwave radiation by at least one of controlling the rate of travel of said stream through said microwave chamber (14); controlling the length of said microwave chamber (14); controlling the total amount of said microwave radiation; controlling the number of operative microwave generators (16); selectively varying the microwave radiation output from the individual ones of a number of microwave generators (16); subjecting said material to a higher level of microwave energy toward an inlet end of said chamber (14) and a lower level of microwave energy toward an outlet end of said chamber (14), predetermining the shape of said microwave chamber (14); focusing said microwave radiation on at least one predetermined point in said stream; and controlling the orientation of the microwave radiation.

5. A process as claimed in Claim 2, 3 or 4 and including at least one of adding a reducing gas to said chamber (14); maintaining said chamber (14) at a pressure above atmospheric; and introducing a catalyst into said chamber (14) to control the sequential production of gaseous products from said materials.

6. An apparatus for the carrying out the process of claim 1, comprising an airtight chamber (14); means (10,12) for feeding said material along a path through said chamber (14); a plurality of microwave generators (16) for irradiating said material in said chamber (14) each provided with a parabolic wave guide for focusing the microwave output of the generator (16), said generators (16) being arranged in a plurality of rows each containing a plurality of said generators, said rows extending transversely to said path in upstream and downstream relationship thereto; means for measuring surface temperature of said material; means for controlling the power of microwaves applied by said generators, in response to said measuring means; means (18) for removing gaseous products from said chamber (14); and means (20,22) for removing solid residue from said chamber (14).

7. An apparatus as claimed in Claim 6, wherein said means (12) for feeding said material into said chamber (14) comprises an endless belt conveyor.

8. An apparatus as claimed in Claim 6 or 7 wherein upstream generators (16) are of greater power output than downstream generators (16).

## Patentansprüche

1. Verfahren zur kontrollierten Reduktion organischen polymeren Materials, bei dem das Material in einer reduzierenden Atmosphäre Stufen von Mikrowellenstrahlung ausgesetzt wird, die ausreichend sind, um eine Depolymerisation des Materials zu bewirken, dadurch gekennzeichnet, dass das Verfahren aus Arbeitsschritten besteht, in welchen in Abhängigkeit von der Art des Materials ein optimaler Wert der Oberflächentzmperatur für die Absorption von Mikrowellen durch das Material bestimmt wird, die Oberflächentemperatur des Materials kontinuierlich überwacht wird, die Stärke der angewandten Mikrowellen gesteuert wird, um den optimalen Wert zu erhalten, und nachfolgend die Stärke der angewandten Mikrowellen gesteuert wird, um die Oberflächentemperatur während der Depolymerisation des Materials auf dem optimalen Wert zu halten.

2. Verfahren nach Anspruch 1, bei dem außerdem ein Strom des Materials kontinuierlich durch eine luftdichte Mikrowellenkammer (14) geleitet wird und aus der Kammer (14) kontinuierlich gasförmige und feste Stoffe abgeführt werden.

3. Verfahren nach Anspruch 2, bei dem das Material außerdem durch einen Zylinder in die Kammer (14) geleitet und durch einen Kolben vorwärts getrieben, auf einem endlosen Bandförderer in die Kammer (14) geleitet, oder mittels eines Schneckenförderers in die Kammer (14) geleitet wird.

4. Verfahren nach Anspruch 2 oder 3, bei dem darüber hinaus das Maß, in dem der Strom der Mikrowellenbestrahlung ausgesetzt ist, durch mindestens eine der Maßnahmen geregelt wird, durch welche die Geschwindigkeit gesteuert wird, mit der der Strom durch die Mikrowellenkammer (14) transportiert wird; durch welche die Länge der der Mikrowellenkammer (14) gesteuert wird; durch welche die Gesamtmenge der Mikrowellenbestrahlung gesteuert wird; durch welche die Anzahl in Betrieb befindlicher Mikrowellengeneratoren (16) gesteuert wird; durch welche wahlweise die Mikrowellenstrahlungsabgabe aus den einzelnen Mikrowellengeneratoren einer Anzahl von Mikrowellengeneratoren (16) geändert wird; durch welche das Material in Richtung eines Einlassendes der Kammer (14) einem höheren Wert von Mikrowellenenergie und in Richtung eines Auslassendes der Kammer (14) einem niedrigeren Wert von Mikrowellenenergie ausgesetzt wird, wodurch die Form der Mikrowellenkammer (14) vorherbestimmt wird; durch welche die Mikrowellenstrahlung auf mindestens einen vorherbestimmten Punkt in dem Strom vereinigt wird; und durch welche die Ausrichtung der Mikrowellenstrahlung gesteuert wird.

5. Verfahren nach Anspruch 2, 3 oder 4, bei dem außerdem zumindest eine der Maßnahmen ergriffen wird, mit welchen der Kammer (14) ein reduzierendes Gas zugeführt wird; der Druck in der Kammer (14) über dem atmosphärischen Druck gehalten wird; und ein Katalysator in die Kammer (14) eingeleitet wird, um die aufeinanderfolgende Erzeugung gasförmiger Produkte aus den Materialien zu steuern.

6. Vorrichtung für die Durchführung des Verfahrens nach Anspruch 1, bestehend aus einer luftdichten Kammer (14); Mitteln (10, 12) für die Zufuhr des Materials entlang eines Weges durch die Kammer (14); einer Vielzahl von Mikrowellengeneratoren (16) zur Bestrahlung des Materials in der Kammer (14), wovon jeder mit einer parabolischen Wellenführung versehen ist, um die vom Generator (16) abgegebenen Mikrowellen zu fokussieren, wobei die Generatoren (16) in einer Vielzahl von Reihen angeordnet sind, die jeweils eine Vielzahl der Generatoren enthalten, und wobei sich die Reihen quer zu dem Weg stromaufwärts und stromabwärts zu diesem erstrecken; Mitteln zum Messen der Oberflächentemperatur des Materials; Mitteln, die die Stärke der von den Generatoren abgegebenen Mikrowellen in Abhängigkeit von den Messmitteln regeln; Mitteln (18) zum Entfernen gasförmiger Produkte aus der Kammer (14); und Mitteln (20, 22) zum Entfernen fester Rückstände aus der Kammer (14).

7. Vorrichtung nach Anspruch 6, bei der das Mittel (12) für die Zufuhr des Materials in die Kammer (14) einen endlosen Bandförderer aufweist.

8. Vorrichtung nach Anspruch 6 oder 7, bei der die stromaufwärts befindlichen Generatoren (16) eine größere Abgabeleistung haben als die stromabwärts befindlichen Generatoren (16).

## Revendications

1. Procédé pour la réduction régulée de matières polymère organiques consistant à soumettre le matériau sous atmosphère réductrice à des niveaux de radiation de micro-ondes suffisants pour provoquer la dépolymérisation de la matière, caractérisé en ce que le procédé comprend les étapes consistant à déterminer en fonction de la nature de la matière, une valeur optimum de température de surface pour l'absorption des micro-ondes par la matière, la surveillance en continu de la température de surface de la matière, la régulation de la puissance des micro-ondes appliquées pour obtenir la valeur optimum et ensuite réguler la puissance des micro-ondes appliquées pour maintenir la température de surface à la valeur optimum pendant la dépolymérisation de la matière.

2. Procédé selon la revendication 1, comprenant de plus l'alimentation en continu d'un courant de matière à travers une chambre à micro-ondes étanche à l'air (14) et le prélèvement en continu de produits gazeux et solides provenant de cette chambre (14).

3. Procédé selon la revendication 2, dans lequel le procédé comprend de plus l'alimentation de la matière dans la chambre (14) par un cylindre et la propulsion par un piston ; l'alimentation de la matière dans la chambre (14) sur une bande transporteuse sans fin ; ou l'alimentation de la matière dans la chambre (14) au moyen d'un transporteur à vis.

4. Procédé selon la revendication 2 ou 3, comprenant l'étape supplémentaire consistant à réguler le degré d'exposition du courant en régulant au moins la vitesse de déplacement du courant à travers la chambre à micro-ondes (14) ; à contrôler la longueur de la chambre à micro-ondes (14) ; à réguler la quantité totale de radiation des micro-ondes ; à réguler le nombre de générateurs de micro-ondes opérants (16) ; à faire varier de façon sélective la sortie de radiation des micro-ondes à partir de chacun des générateurs parmi un certain nombre de générateurs de micro-ondes (16); à soumettre la matière à un niveau élevé d'énergie de micro-ondes en direction d'une extrémité d'admission de la chambre (14) et à un niveau inférieur d'énergie de micro-ondes vers une extrémité de sortie de la chambre (14), à prédéterminer la forme de la chambre à micro-ondes (14) ; à focaliser la radiation des micro-ondes sur au moins un point prédéterminé dans le courant ; et à réguler l'orientation de la radiation des micro-ondes.

5. Procédé selon la revendication 2, 3 ou 4 et comprenant au moins l'une des opérations consistant à ajouter un gaz réducteur à la chambre (14) ; à maintenir la chambre (14) à une pression au-dessus de la pression atmosphérique et à introduire un catalyseur dans la chambre (14) pour réguler la génération séquentielle de produits gazeux provenant de ces matières.

6. Appareil pour effectuer le procédé de la revendication 1, comprenant une chambre étanche à l'air (14) ; des moyens (10, 12) pour alimenter la matière sur un circuit à travers la chambre (14) ; une pluralité de générateurs de micro-ondes (16) pour irradier la matière dans la chambre (14), chacun muni d'un guide d'ondes parabolique pour focaliser la sortie de micro-ondes du générateur (16), les générateurs (16) étant disposés dans une pluralité de rangées, chacune contenant une pluralité de générateurs, les rangées s'étendant transversalement par rapport au circuit en relation amont et aval ; des moyens pour mesurer la température de surface du matériau ; des moyens pour réguler la puissance des micro-ondes appliquées par le générateur, en réponse à des moyens de mesure ; des moyens (18) pour enlever les produits gazeux de la chambre (14) et des moyens (20, 22) pour enlever les résidus solides de la chambre (14).

7. Appareil selon la revendication 6, dans lequel les moyens (12) pour alimenter la matière dans la chambre (14) comprennent une bande transporteuse sans fin.

8. Appareil selon la revendication 6 ou 7, dans lequel les générateurs amont (16) ont une puissance de sortie supérieure aux générateurs aval (16).